# FASCICULE DE BREVET EUROPEEN

(11) **EP 3 004 022 B1**
(45) Date de publication et mention de la délivrance du brevet: **11.03.2020**
(21) Numéro de dépôt: 14725705.9
(22) Date de dépôt: 23.05.2014
(51) Int. Cl.: C04B 35/10, C04B 35/48, C04B 35/56, C04B 35/632, C04B 35/634, C04B 35/584, C04B 26/06, C04B 111/70, C04B 111/00, B22F 3/22, B22F 1/00

(54) **LIANT POUR COMPOSITION DE MOULAGE PAR INJECTION**
BINDEMITTEL FÜR SPRITZGUSSZUSAMMENSETZUNG
BINDER FOR INJECTION MOULDING COMPOSITION

(30) Priorité: 28.05.2013 CH 10212013; 15.07.2013 EP 13176532
(43) Date de publication de la demande: 13.04.2016
(60) Demande divisionnaire: 19209842.4
(73) Titulaire: Comadur S.A., 2400 Le Locle (CH)
(72) Inventeur: CARTIER, Damien, F-25000 Besançon (FR)
(74) Mandataire: Ravenel, Thierry Gérard Louis
(86) Numéro de dépôt international: PCT/EP2014/060613
(87) Numéro de publication internationale: WO 2014/191304

(56) Documents cités:
- WO-A1-2005/061602
- US-A- 5 254 613
- US-A- 5 266 264
- US-A1- 2003 220 424
- Jafar Firouzi ET AL: "Rheological Behaviour of Metal Powder Suspensions Under Dynamic Loading", IRANIAN POLYMER JOURNAL, 2006, pages 127-134, XP055101429, Extrait de l'Internet: URL:http://nullwww.sid.ir/en/VEWSSID/J_pdf /81320060204.pdf [extrait le 2014-02-11]
- Berenika Hausnerová: "Rheological characterization of powder injection molding compounds", POLIMERY, vol. 55, no. 1, 1 January 2010 (2010-01-01), pages 3-11, XP055385569, PL ISSN: 0032-2725

## Description

L'invention concerne une composition de liant pour moulage par injection ainsi qu'une composition de moulage par injection (feedstock) destinée à la fabrication de pièces de forme métalliques ou céramiques

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, et notamment en ce qui concerne des matériaux durs généralement désignés sous le nom générique de « céramiques » inorganiques, on met en œuvre des techniques de métallurgie des poudres. On appellera ici « céramique » le matériau de synthèse inorganique obtenu, quelle que soit la nature de ce matériau, saphir, rubis, diamant artificiel, glace saphir, céramique, micro-aimant, métal, alliage, ou autre.

Les matières premières de base sont de différente nature, de façon générale, et comportent au moins d'une part de la poudre de céramique et d'autre part des liants organiques, tels que résines ou matières plastiques ou similaires qui permettent l'injection et la bonne tenue du composant réalisé avec le mélange de l'ensemble des matières premières. D'autres additifs peuvent être incorporés au mélange. Ces matières premières peuvent également être de différentes textures: solide, pulvérulente, liquide, ou encore pâteuse. Le mélange peut en outre changer de structure au cours de son élaboration, en particulier, et non limitativement, quand des composants complémentaires d'une résine subissent une réaction de polymérisation.

Le procédé global de fabrication d'un composant céramique inorganique comporte au moins les étapes suivantes :
- préparation des matières premières ;
- mélange(s) des matières premières, ou/et pré-mélange deux à deux (ou plus) si nécessaire ;
- malaxage d'homogénéisation ;
- granulation ;
- pressage, notamment dans une chambre de moulage, d'une quantité de poudre ou de granulés feedstock issue du malaxage et de la granulation, pour la réalisation d'une ébauche de composant. Ce pressage peut être réalisé par injection, sous pression, notamment dans un injecteur à vis comportant des moyens de mise en température de cette quantité de poudre ou de granulés feedstock issue du malaxage et de la granulation;
- étuvage de déliantage pour la combustion ou/et la dissolution de certains composants du mélange ;
- traitement thermique de l'ébauche en sortie de déliantage, pour le frittage donnant sa cohérence finale au composant fini. Ce traitement thermique entraîne un retrait dimensionnel, qui permet l'obtention d'un composant en cotes finies ;
- traitement de finition d'aspect du composant.

L'invention vise plus particulièrement à proposer un liant pour composition de moulage par injection optimisé facilitant le malaxage en métallurgie des poudres pour l'obtention de céramiques ou de métaux, de façon à obtenir une production de qualité très reproductible, avec un coefficient de retrait maîtrisé.

On connaît déjà, par exemple le brevet US 5145900, des matériaux thermoplastiques (feedstock) pour la fabrication de pièces moulées céramiques qui contiennent une poudre inorganique frittable et un liant organique polymérique, celui-ci étant essentiellement constitué d'un mélange de polyoxyméthylène et de copolymères de polyoxyméthylène et de polyoxolanes.

Les brevets US 5266264 A, US 5254613 A et US 2003/0220424 A1, ainsi que les articles "Rheological characterization of powder injection molding compounds" de Berenika Hausnerová (Polimery , 55, no. 1, 2010, 3-11) et "Rheological Behaviour of Metal Powder Suspensions Under Dynamic Loading" de Jafar Firouzi et al. (Iranian Polymer Journal, 15, no. 2, 2006, 127-134), décrivent des compositions de liants dans des compositions de moulage par injection.

Ces feedstocks ont révélé toutefois de nombreux inconvénients, comme par exemple une fluidité insuffisante en moulage par injection, et des problèmes de tenue des pièces de formes moulées qui présentent des fissures et du feuilletage, ceci surtout lorsque la forme des pièces est complexe; ils sont en outre responsables de problèmes environnementaux dus à la nécessité d'utiliser des produits agressifs, tels que l'acide nitrique, plus particulièrement pour l'élimination finale de la phase organique. De plus, l'utilisation d'eau dans ce processus d'élimination du liant organique est problématique dans le cas où les feedstocks contiennent des matériaux métalliques qui risquent d'être oxydés.

En conséquence, le but de la présente invention consiste à fournir un liant pour composition de moulage qui obvie aux inconvénients susmentionnés, et plus particulièrement qui vise à améliorer l'homogénéité et la fluidité du feedstock pour permettre la fabrication de pièces métalliques ou céramiques de formes plus complexes, de réduire les temps de cycle en production, d'augmenter la résistance mécanique des corps verts et déliantés aux contraintes de production (manipulation et diverses opérations de reprise), et enfin qui supprime la nécessité d'utiliser des produits agressifs pour l'environnement pour l'élimination du liant organique, en remplaçant ceux-ci par des solvants non polluants pouvant être éliminés par simple traitement thermique.

A cet effet, l'invention a pour objet un liant pour composition de moulage par injection comprenant :
- au moins 35 % vol. D'une base polymérique,
- de 40 à 55 % vol. D'un mélange de cires ou un mélange de cire et d'huile de palme,
- et 10% vol. D'un surfactant,
dans lequel la base polymérique contient des copolymères d'éthylène et d'acide méthacrylique ou acrylique, ou des copolymères d'éthylène comprenant un anhydride maléique ou un mélange de ces copolymères, ainsi que du polyéthylène, du polypropylène et une résine acrylique les quantités respectives des composants du liant étant telles qu'additionnées entre elles, elles ne dépassent pas les 100%.

De préférence, le liant de l'invention comprend de 2 à 7 % vol. d'un desdits copolymères ou de leurs mélanges, environ 25 % vol. de polyéthylène, de 2 à 15 % vol. de polypropylène et de 6 à 15% vol. de résine acrylique.

Selon un mode de réalisation préféré, le copolymère d'éthylène et d'acide méthacrylique ou acrylique contient de 3 à 10 % pds. de comonomère méthacrylique ou acrylique, le copolymère d'éthylène et d'acétate de vinyle contient de 7 à 18 % pds. de comonomère acétate de vinyle, et le copolymère d'éthylène et d'anhydride est un copolymère statistique (*random*) d'éthylène et d'anhydride maléique ayant un point de fusion de 100 à 110 °C ou un copolymère de polyéthylène HD et d'un anhydride modifié ayant une point de fusion de 130 à 134°C.

La résine acrylique présente un poids moléculaire compris entre 50000 et 220000 et une viscosité inhérente de 0,21 à 0,83, et est choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères. Par viscosité inhérente on entend la viscosité d'une solution contenant 0.25g de polymère dans 50 ml de chlorure de méthylène mesurée à 20°C avec un viscosimètre Cannon-Fenske.

De manière avantageuse, la cire est une cire de Carnauba ou une cire de paraffine, ou une huile de palme, ou un mélange de ces éléments typiquement un mélange de cire de Carnauba et d'une cire de paraffine ou un mélange de cire de Carnauba et d'une huile de palme. Selon une autre caractéristique préférée, le surfactant est un NN'- éthylène-bis(stéaramide) ou un mélange d'acides stéarique et palmitique (stéarine), ou un mélange de ces éléments.

Selon une autre caractéristique, le surfactant et les résines acryliques sont solubles dans l'alcool isopropylique et/ou l'essence de térébenthine.

L'invention a également pour objet une composition de moulage par injection (feedstock) destinée à la fabrication de pièces de forme métalliques ou céramiques comprenant 76 à 96 % pds. d'une poudre inorganique et 4 à 24 % pds. du liant suivant l'invention décrit ci-avant.

Selon une caractéristique particulière, la poudre inorganique de la composition de moulage par injection peut être choisie parmi l'ensemble comprenant une poudre d'oxyde, de nitrure, de carbure, de métal, ou un mélange de ces dites poudres et de préférence la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique ou une mélanges de ces poudres.

Selon des modes de réalisation préférés de la composition de moulage par injection , cette dernière contient en % poids :
- 76 à 88 % d'alumine et 12 à 24% de liant selon l'invention tel que défini plus haut, ou
- 76 à 88% d'alumine et 0.1 à 0.6% d'oxyde de magnésium et 12 à 24% de liant de l'invention, ou
- 58 à 86.5 % d'oxyde zirconium et 3.9 à 4.6% d'oxyde d'yttrium et 0.18 à 18.5% d'alumine et 9 à 22% de liant de l'invention, ou
- 61.5 à 84% d'oxyde de zirconium et 3.9 à 4.6% d'oxyde d'yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant de l'invention, ou
- de 88 à 91 % de carbure de chrome ou de titane, et de 9 à 12% de liant de l'invention, ou
- de 93 à 96 % de carbure de tungstène ou de tungstène métallique et de 4 à 7% de liant de l'invention, ou
- de 78 à 85% de nitrure de silicium et de 15 à 22% de liant de l'invention.

La présente invention sera maintenant illustrée plus en détails par les exemples non limitatifs qui suivent, les exemples 1 et 2 n'étant pas suivant l'invention.

### Exemple 1

On mélange la partie polymérique du liant à une poudre d'oxyde zirconium noir (de type St. Gobain Zir Black) à une température d'environ 150°C pour former un prémix. A ce prémix sont ajoutés les cires et le surfactant, et la température est à nouveau augmentée jusqu'à environ 180 °C pour former une sorte de pâte homogène, laquelle est alors refroidie puis granulée jusqu'à solidification, puis conservée pour constituer le feedstock utilisable dans la fabrication d'une pièce de forme par injection selon une technique connue. Cette technique comprend typiquement une opération de moulage par injection à chaud sous pression dans un moule avec cavités. La pièce est refroidie dans la cavité puis est éjectée du moule. l'ensemble du processus se produit à environ 180°C. La pièce verte est ensuite déliantée avant d'être frittée, Par le déliantage on élimine une partie du liant organique de la pièce pour ne laisser que suffisamment de liant pour maintenir la cohésion, ou en d'autres termes la forme moulée de la pièce verte. Le liant est typiquement extrait de la pièce verte par chauffage du solvant dans lequel la pièce est immergée. Lors de cette opération au moins 40% des composés du liant doivent se dissoudre. Avec le liant de l'invention, la pièce verte est typiquement plongée dans le solvant et chauffée à une température de l'ordre de 70°C. A cette température, le mélange de cires et ou le mélange de cire et d'huile se décompose thermiquement alors que les surfactants et la résine acrylique sont dissous chimiquement. Une fois l'opération de déliantage terminée, la pièce poreuse. La pièce est ensuite placée dans un four haute température pour dans un premier temps éliminer le liant restant (typiquement à une température inférieure à 400°C), cette opération étant facilitée par la porosité laissée dans la pièce lors du déliantage, puis dans un deuxième temps fritter la pièce à haute température
Dans cet exemple, on a utilisé plus particulièrement 17,2 kg de la poudre de zircone (86 % pds.) et 2,8 kg du liant (env. 14% pds) ayant la composition volumique suivante:
- 24 % de polyéthylène HD
- 10 % de polypropylène
- 4 % de copolymère d'éthylène et d'acide méthacrylique (à 6,5 % pds. d'acide méthacrylique, par exemple du type "Nucrel (TM)" de DuPont)
- 10 % d'une résine polymère méthacrylate d'iso-butyle ayant un poids moléculaire de 195'000 (par exemple du type "Elvacite (TM) 2045" de Lucite International)
- 1 % d'une résine copolymère méthacrylate d'isobutyle et N-butyle ayant un poids moléculaire de 165'000 (par exemple du type "Elvacite (TM) 2046" de Lucite International)
- 11 % de cire Carnauba
- 31 % d'une cire de paraffine (par exemple du type "Carisma 54 T (TM)" de Alpha Wax BV)
- 6 % de bis-stéaramide de N, N'-éthylène
- 3 % d'un mélange d'acides stéarique et palmitique (par exemple du type Stéarine Dubois).

### Exemple 2

Le même type de feedstock que dans l'Exemple 1 ci-dessus est préparé en remplaçant l'oxyde de zirconium noir par de l'oxyde de zirconium blanc, et en utilisant des valeurs légèrement différentes des divers composants du liant, plus particulièrement:
- 26 % du polyéthylène HD
- 10% de polypropylène
- 4% de copolymère d'éthylène et d'acide méthacrylique
- 11 % de la résine "Elvacite 2045"
- 1% de résine "Elvacite 2046"
- 11% de cire de Carnauba
- 29 % de la cire de paraffine
- 8 % de la bis-stéaramide de N, N'-éthylène

### Exemple 3

Toujours avec les mêmes composants du liant organique, avec des proportions volumiques légèrement différentes, d'autres feedstocks peuvent être préparés avec divers poudres céramiques ou métalliques, plus particulièrement de l'alumine, avec indice de retrait de 1,19 ou 1,30 (translucide), du carbure de chrome ou du carbure de titane, du carbure de tungstène (de différentes qualités) et du tungstène métallique, selon le Tableau suivant (seuls les exemples contenant 10% vol. de surfactant sont suivant l'invention).

| Liant (% vol.) | Al₂O₃ | Al₂O₃ (transl.) | CrC (90% pds) | CW | W |
|---|---|---|---|---|---|
| | (85-6% pds) | (78-9% pds) | TiC (89% pds) | (94-94,5% pds) | (94-5% pds) |
| Polyéthylène HD | 26 | 28 | 24 | 25/25 | 26/25 |
| Polypropylène | 6 | 2 | 6 | 8/8 | 10/10 |
| Copolymère ("Nucrel") | 3,5 | 3 | 3 | 4/4 | 4/4 |
| Résine "Elvacite 2045" | 6 | 5 | 5 | 7/7 | 9/7 |
| Résine "Elvacite 2046" | 1 | 1 | 1 | 1/1 | 1/1 |
| Cire de Carnauba | 12 | 12 | 12 | 11/11 | 11/11 |
| Cire de paraffine | 35 | 39 | 39 | 34/37 | 29/32 |
| Bix-stéréamide de NN'-éthylène | 5,5 | 5 | 5 | 5/5 | 5/5 |
| Stéarine (Dubois) | 5 | 5 | 5 | 5/2 | 5/5 |

## Revendications

1. Liant pour composition de moulage par injection comprenant :
- au moins 35% vol. d'une base polymérique,
- de 40 à 55% vol. d'un mélange de cires ou un mélange de cire et d'huile de palme,
- et 10% vol. d'un surfactant,
dans lequel la base polymérique contient des copolymères d'éthylène et d'acide méthacrylique ou acrylique, ou des copolymères d'éthylène comprenant un anhydride maléique ou un mélange de ces copolymères, ainsi que du polyéthylène, du polypropylène et une résine acrylique, la résine acrylique présentant un poids moléculaire compris entre 50000 et 220000 et une viscosité inhérente de 0.21 à 0.83, et étant choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères,
les quantités respectives des composants du liant étant telles qu'additionnées entre elles, elles ne dépassent pas les 100%.

2. Liant selon la revendication 1 comprenant de 2 à 7 % vol. d'un desdits copolymères ou de leurs mélanges, 25 % vol. de polyéthylène, de 2 à 15 % vol. de polypropylène et de 6 à 15% vol. de résine acrylique.

3. Liant selon l'une des revendications 1 à 2, dans lequel le copolymère d'éthylène et d'acide méthacrylique ou acrylique contient de 3 à 10 % pds. de comonomère méthacrylique ou acrylique, et le copolymère d'éthylène et d'anhydride est un copolymère statistique (*random*) d'éthylène et d'anhydride maléique ayant un point de fusion de 100 à 110°C ou un copolymère de polyéthylène HD et d'un anhydride modifié ayant une point de fusion de 130 à 134°C.

4. Liant selon l'une des revendications précédentes, dans lequel le mélange de cires comprend une cire de Carnauba et une cire de paraffine.

5. Liant selon l'une des revendications précédentes, dans lequel le surfactant est un NN'-éthylène-bis(stéaramide), ou un mélange d'acides stéarique et palmitique (stéarine), ou un mélange de ces éléments.

6. Liant selon l'une des revendications précédentes, **caractérisé en ce que** le surfactant et les résines acryliques sont solubles dans l'alcool isopropylique et/ou l'essence de térébenthine

7. Composition de moulage par injection (feedstock) destinée à la fabrication de pièces de forme métalliques ou céramiques comprenant 76 à 96% pds. d'une poudre inorganique et 4 à 24% pds. du liant selon l'une des revendications 1 à 6.

8. Composition de moulage selon la revendication 7, dans laquelle la poudre inorganique est choisie parmi l'ensemble comprenant une poudre d'oxyde, de nitrure, de carbure, de métal, ou un mélange de celles-ci.

9. Composition de moulage selon la revendication 7, dans laquelle la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique, ou un mélange de ces poudres .

10. Composition de moulage selon la revendication 8 ou 9, qui contient en % poids :
• 76 à 88 % d'alumine et 12 à 24% de liant,
• 76 à 88% d'alumine et 0.1 à 0.6% d'oxyde de magnésium et 11.9 à 23.9% de liant,
• 58 à 86.5% d'oxyde zirconium et 3.9 à 4.6% d'oxyde d'yttrium et 0.18 à 18.5% d'alumine et 9 à 22% de liant,
• 61.5 à 84% d'oxyde de zirconium et 3.9 à 4.6% d'oxyde d'Yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant,
• de 88 à 91% de carbure de chrome ou de titane et de 9 à 12% de liant,
• de 93 à 96% de carbure de tungstène ou de tungstène métallique et de 4 à 7% de liant, ou
• de 78 à 85% de Nitrure de silicium et de 15 à 22% de liant.

## Patentansprüche

1. Bindemittel für eine Spritzgusszusammensetzung, umfassend:
- mindestens 35 Vol.-% einer Polymerbasis,
- 40 bis 55 Vol.-% eines Gemisches von Wachsen oder eines Gemisches von Wachs und Palmöl,
- und 10 Vol.-% eines Tensids,
wobei die Polymerbasis Ethylen- und Methacryl- oder Acrylsäure-Copolymere oder Ethylen-Copolymere mit einem Maleinsäureanhydrid oder ein Gemisch dieser Copolymere sowie Polyethylen, Polypropylen und ein Acrylharz enthält, wobei das Acrylharz ein Molekulargewicht zwischen 50.000 und 220.000 und eine Eigenviskosität von 0,21 bis 0,83 aufweist und aus der Gruppe ausgewählt ist, die die Isobutylmethacrylat-, Methylmethacrylat-, Ethylmethacrylat- und N-Butylmethacrylat-Polymere und die Isobutylmethacrylat und N-Butylmethacrylat und Methylmethacrylat- und N-Butylmethacrylat-Copolymere oder Gemische dieser Polymere und/oder Copolymere umfasst, wobei die jeweiligen Mengen der Bestandteile des Bindemittels derart sind, dass sie miteinander vermischt 100 % nicht überschreiten.

2. Bindemittel nach Anspruch 1, umfassend 2 bis 7 Vol.-% von einem der Copolymere oder ihrer Gemische, 25 Vol.-% Polyethylen, 2 bis 15 Vol.-% Polypropylen und 6 bis 15 % Acrylharz.

3. Bindemittel nach einem der Ansprüche 1 bis 2, wobei das Ethylen- und Methacrylsäure- oder Acrylsäure-Copolymer 3 bis 10 Gew.-% Methacryl- oder Acryl-Comonomer enthält, und das Ehtylen- und Anhydrid-Copolymer ein statistisches (random) Ehtylen- und Maleinsäureanhydrid-Copolymer mit einem Schmelzpunkt von 100 bis 110 °C oder ein Copolymer von HD-Polyethylen und eines modifizierten Anhydrids mit einem Schmelzpunkt von 130 bis 134 °C ist.

4. Bindemittel nach einem der vorhergehenden Ansprüche, wobei das Gemisch von Wachsen ein Carnaubawachs und ein Paraffinwachs umfasst.

5. Bindemittel nach einem der vorhergehenden Ansprüche, wobei das Tensid NN'-Ethylen-bis(stearamid) oder ein Gemisch von Stearinsäuren und Palmitinsäuren (Stearin) oder ein Gemisch dieser Elemente ist.

6. Bindemittel nach einem der vorhergehenden Ansprüche, **dadurch gekennzeichnet, dass** das Tensid und die Acrylharze in Isopropylalkohol und/oder in Terpentinessenz löslich sind.

7. Spritzgusszusammensetzung (Rohmaterial), die für die Herstellung von metallischen oder keramischen Formteilen bestimmt ist, die 76 bis 96 Gew.-% eines anorganischen Pulvers und 4 bis 24 Gew.-% des Bindemittels nach einem der Ansprüche 1 bis 6 umfasst.

8. Spritzgusszusammensetzung nach Anspruch 7, wobei das anorganische Pulver aus der Gruppe ausgewählt ist, die ein Oxid-, Nitrid-, Carbid-, Metallpulver oder ein Gemisch von diesen umfasst.

9. Spritzgusszusammensetzung nach Anspruch 7, wobei das anorganische Pulver aus der Gruppe ausgewählt ist, die ein Aluminiumoxidpulver, ein Zirkoniumoxidpulver, ein Chromcarbidpulver, ein Titancarbidpulver oder Wolframcarbidpulver, ein Pulver aus metallischem Wolfram oder Siliziumnitrid, ein Edelstahlpulver, ein Pulver aus metallischem Titan oder ein Gemisch dieser Pulver umfasst.

10. Spritzgusszusammensetzung nach Anspruch 8 oder 9, die in Gewichts-% enthält:
- 76 bis 88 % Aluminiumoxid und 12 bis 24 % Bindemittel,
- 76 bis 88 % Aluminiumoxid und 0,1 bis 0,6 % Magnesiumoxid und 11,9 bis 23,9 % Bindemittel,
- 58 bis 86,5 % Zirkoniumoxid und 3,9 bis 4,6 % Yttriumoxid und 0,18 bis 18,5 % Aluminiumoxid und 9 bis 22 % Bindemittel,
- 61,5 bis 84 % Zirkoniumoxid und 3,9 bis 4,6 % Yttriumoxid und 0,2 bis 9 % Aluminiumoxid und 2 bis 5,5 % anorganische Pigmente einer Liste, die Eisenoxid, Kobaltoxid, Chromoxid, Titanoxid, Manganoxid, Zinkoxid oder ein Gemisch der Oxide umfasst, und 9 bis 22 % Bindemittel,
- 88 bis 91 % Chrom, oder Titancarbid und 9 bis 12 % Bindemittel,
- 93 bis 96 % Wolframcarbid oder metallisches Wolfram und 4 bis 7 % Bindemittel, oder
- 78 bis 85 % Siliziumnitrid und 15 bis 22 % Bindemittel.

## Claims

1. Binder for injection moulding composition including:
- at least 35% by volume of a polymeric base,
- from 40 to 55% by volume of a mixture of waxes or a mixture of wax and palm oil,
- and 10% by volume of a surfactant,
wherein the polymeric base contains ethylene and methacrylic or acrylic acid copolymers, or ethylene copolymers comprising a maleic anhydride or a mixture of such copolymers, in addition to polyethylene, polypropylene and an acrylic resin, the acrylic resin having a molecular weight of between 50000 and 220000 and an inherent viscosity of 0.21 to 0.83, and being chosen from the group including polymers of isobutyl methacrylate, methyl methacrylate, ethyl methacrylate and N-butyl methacrylate, and copolymers of isobutyl methacrylate and N-butyl methacrylate and of methyl methacrylate and N-butyl methacrylate, or a mixture of these polymers and/or copolymers,
the respective quantities of the binder components being such that added together, they do not exceed 100%.

2. Binder according to claim 1, including from 2 to 7% by volume of one of said copolymers or their mixtures, 25% by volume of polyethylene, 2 to 15% by volume of polypropylene and 6 to 15% by volume of acrylic resin.

3. Binder according to any of claims 1 to 2, wherein the ethylene and methacrylic or acrylic acid copolymer contains 3 to 10% by weight of a methacrylic or acrylic comonomer, and the copolymer of ethylene and anhydride is a random copolymer of ethylene and maleic anhydride with a melting point of 100 to 110°C or a copolymer of HD polyethylene and a modified anhydride with a melting point of 130 to 134°C.

4. Binder according to any of the preceding claims, wherein the wax mixture includes a Carnauba wax and a paraffin wax.

5. Binder according to any of the preceding claims, wherein the surfactant is an N, N'-ethylene bis(stearamide) or a mixture of stearic and palmitic acids (stearin), or a mixture of such elements.

6. Binder according to any of the preceding claims, **characterized in that** the surfactant and the acrylic resins are soluble in isopropyl alcohol and/or terebenthine essence.

7. Injection moulding composition (feedstock) intended for the manufacture of shaped metallic or ceramic parts including 76 to 96% by weight of an inorganic powder and 4 to 24% by weight of the binder according to any of claims 1 to 6.

8. Moulding composition according to claim 7, wherein the inorganic powder is selected from among the group including an oxide, nitride, carbide, metal powder or a mixture thereof.

9. Moulding composition according to claim 7, wherein said inorganic powder is chosen from the group including an alumina powder, a zirconium oxide powder, a chromium carbide powder, a titanium carbide powder or a tungsten carbide powder, a tungsten metal or silicon nitride powder, a stainless steel powder, a titanium metal powder or a mixture of said powders.

10. Moulding composition according to claim 8 or 9, which contains in weight percentage:
• 76 to 88% of alumina, and 12 to 24% of binder,
• 76 to 88% of alumina and 0.1 to 0.6% of magnesium oxide and 11.9 to 23.9% of binder,
• 58 to 86.5% of zirconium oxide and 3.9 to 4.6% of yttrium oxide and 0.18 to 18.5% of alumina and 9 to 22% of binder,
• 61.5 to 84% of zirconium oxide and 3.9 to 4.6% of yttrium oxide and 0.2 to 9% of alumina and 2 to 5.5% of inorganic pigments from a list including iron oxide, cobalt oxide, chromium oxide, titanium oxide, manganese oxide, zinc oxide or a mixture of said oxides and 9 to 22% of binder,
• 88 to 91% of chromium or titanium carbide, and 9 to 12% of binder,
• 93 to 96% of tungsten carbide or tungsten metal and 4 to 7% of binder, or
• 78 to 85% of silicon nitride, and 15 to 22% of binder.
